# EUROPÄISCHE PATENTANMELDUNG

(11) **EP 4 603 940 A1**
(43) Veröffentlichungstag der Anmeldung: **20.08.2025**
(21) Anmeldenummer: 25157161.8
(22) Anmeldetag: 11.02.2025
(51) Int. Cl.: G05D 1/242, G05D 1/43, G05D 1/246, G01C 21/00

(54) **SELBSTFAHRENDES REINIGUNGSGERÄT UND VERFAHREN ZUM BETREIBEN EINES SELBSTFAHRENDEN REINIGUNGSGERÄTS**

(30) Priorität: 13.02.2024 CN 202410180320
(71) Anmelder: Vorwerk & Co. Interholding GmbH, 42275 Wuppertal (DE)
(72) Erfinder: WANG, Bo, 201707, Shanghai (CN); YAN, Wenjie, 40549 Düsseldorf (DE)
(74) Vertreter: Von Rohr Patentanwälte Partnerschaft mbB

(57) **Zusammenfassung**

Es werden ein selbstfahrendes Reinigungsgerät und ein Verfahren zum Betreiben eines selbstfahrenden Reinigungsgeräts vorgeschlagen, wobei das Reinigungsgerät autonom in einer Umgebung navigiert und seine Position in der Umgebung mittels einer Navigationseinrichtung bestimmt, wobei das Reinigungsgerät ein Erkennungsverfahren zum Erkennen einer Delokalisierungssituation durchführt. Dabei ist eine Delokalisierungssituation eine Situation, in der ein Verlust einer Bestimmbarkeit der Position entlang zumindest einer Achse droht oder erfolgt ist und/oder in der sich das Reinigungsgerät in einem Korridor befindet oder in einen Korridor zu gelangen droht. Bei dem Erkennungsverfahren wird eine gerade Hauptlinie in Messdaten der Navigationseinrichtung identifiziert wird und analysiert, ob die Messdaten eine sich quer zu der Hauptlinie erstreckende Struktur enthalten, wobei eine Ausdehnung von Strukturen in den Messdaten orthogonal zu der Hauptlinie bestimmt und mit einem insbesondere vordefinierten Grenzwert verglichen wird, und dass es als Delokalisierungssituation gewertet wird, wenn die Messdaten keine Struktur enthalten, deren Ausdehnung größer als der Grenzwert ist.

## Beschreibung

Die vorliegende Erfindung betrifft ein Verfahren zum Betreiben eines selbstfahrenden Reinigungsgeräts sowie ein selbstfahrendes Reinigungsgerät.

Aus dem Stand der Technik sind sich selbsttätig fortbewegende bzw. selbstfahrende Reinigungsgeräte insbesondere als (teil-)autonome Staubsaugerroboter, Wischroboter oder Saug-Wisch-Roboter zur Reinigung von Flächen, wie Fußböden, bekannt.

Derartige Reinigungsgeräte sind üblicherweise mit einer Navigationseinrichtung ausgestattet, um eine Navigation in einer bekannten oder unbekannten Umgebung zu ermöglichen.

Für die Navigation in der Umgebung ist es erforderlich, dass selbstfahrende Reinigungsgeräte ihre Position mittels der Navigationseinrichtung in der Umgebung bestimmen.

Sofern die Umgebung unbekannt ist, also beispielsweise keine detaillierten Karteninformationen über die Umgebung vorliegen, ist zunächst eine Kartierung der Umgebung mittels des Reinigungsgeräts durchzuführen. Für die Kartierung ist jedoch wiederum die genaue/wahre Position des Reinigungsgeräts erforderlich.

Im Rahmen der sogenannten gleichzeitigen Positionsbestimmung und Kartierung, englisch *Simultaneous Localization and Mapping,* kurz SLAM, soll das Problem gelöst werden, dass ein Reinigungsgerät autonom eine neue/unbekannte Umgebung erkundet und gleichzeitig eine Karte dieser Umgebung erstellt, die anschließend für die Navigation des Reinigungsgeräts in der Umgebung verwendet wird.

Insbesondere aufgrund der begrenzten Reichweite der eingesetzten Sensorik können jedoch Situationen entstehen, in denen die Position mittels der Navigationseinrichtung nicht mehr bestimmbar ist.

Beispielsweise ist eine Bestimmung der Position nicht (mehr) möglich, wenn sich das Reinigungsgerät in einem Korridor, also einem länglichen, durch zwei parallele Wände begrenzten Raum, befindet und sich außer den parallelen Wänden keine weiteren Objekte innerhalb eines Messbereichs bzw. Erfassungsbereichs der Navigationseinrichtung befinden. In diesem Fall kann zwar der Abstand des Reinigungsgeräts zu den Wänden bestimmt werden, aber nicht die Position in Längsrichtung des Korridors parallel zu den Wänden, da sich in Längsrichtung des Korridors an verschiedenen Positionen jeweils die gleichen Messdaten ergeben.

Eine Situation, in der ein Verlust einer Bestimmbarkeit der Position entlang zumindest einer Achse droht oder erfolgt ist und/oder in der sich das Reinigungsgerät in einem Korridor befindet oder in einen Korridor zu gelangen droht, wird im Rahmen der vorliegenden Erfindung als Delokalisierungssituation bezeichnet.

Aus dem Stand der Technik ist es bekannt, die Kovarianz einer Partikelfilter-Verteilung von Messdaten zu verwenden, um eine Delokalisierungssituation zu erkennen, wenn ein Verlust einer Bestimmbarkeit der Position droht oder erfolgt ist. Diese Methode ist jedoch relativ zeitaufwendig, so dass eine Delokalisierungssituation erst mit einer gewissen Zeitverzögerung erkannt wird. In der Zeit, die für das Erkennen der Delokalisierungssituation benötigt wird, kann sich das Reinigungsgerät daher schon zu einer anderen, insbesondere unbekannten bzw. unbestimmbaren, Position fortbewegt haben, sodass die letzte bestimmte Position nicht mit der Position des Reinigungsgeräts zum Zeitpunkt der Erkennung der Delokalisierungssituation übereinstimmt. Somit kann die Position bereits nicht mehr oder nur noch sehr ungenau bestimmt werden, selbst wenn zu einem anderen Verfahren zur Bestimmung der Position gewechselt wird. Die Zeitverzögerung bei der Erkennung von Delokalisierungssituationen kann also zum Verlust der bestimmten Position führen.

Der vorliegenden Erfindung liegt die Aufgabe zugrunde, ein im Vergleich zum Stand der Technik verbessertes Verfahren zum Betreiben eines selbstfahrenden Reinigungsgeräts und ein verbessertes selbstfahrendes Reinigungsgerät anzugeben, wobei eine genauere bzw. weniger fehleranfällige Positionsbestimmung des Reinigungsgeräts in einer unbekannten oder bekannten Umgebung ermöglicht oder unterstützt wird und/oder die Wahrscheinlichkeit eines Verlusts der bestimmten Position verringert wird und/oder eine schnellere Erkennung von Delokalisierungssituationen erreicht wird.

Die der Erfindung zugrunde liegende Aufgabe wird durch das Verfahren gemäß Anspruch 1 oder das Reinigungsgerät gemäß Anspruch 15 gelöst. Vorteilhafte Weiterbildungen sind Gegenstand der Unteransprüche.

Die vorliegende Erfindung betrifft ein vorzugsweise computerimplementiertes Verfahren zum Betreiben eines Reinigungsgeräts. Vorzugsweise wird bzw. werden das vorschlagsgemäße Verfahren, insbesondere einzelne oder alle Verfahrensschritte des vorschlagsgemäßen Verfahrens, mittels des Reinigungsgeräts automatisch bzw. selbsttätig durchgeführt, insbesondere durch entsprechende Mittel zur Datenverarbeitung und Steuerung des Reinigungsgeräts, wie eine Datenverarbeitungseinrichtung und/oder eine Steuereinrichtung.

Ein Reinigungsgerät im Sinne der vorliegenden Erfindung ist vorzugsweise ein (teil-)autonomer bzw. selbstfahrender Staubsaugerroboter, Wischroboter oder Saug-Wisch-Roboter. Insbesondere ist ein Reinigungsgerät im Sinne der vorliegenden Erfindung dazu ausgebildet, während eines Reinigungsvorgangs eine Reinigungsfläche selbsttätig bzw. (teil-)autonom zu reinigen. Es kann sich bei dem Reinigungsgerät im Sinne der vorliegenden Erfindung aber auch um eine sonstige Vorrichtung zur Reinigung, Bearbeitung und/oder Pflege von Flächen, insbesondere Fußböden, handeln. Beispielsweise sind auch Poliergeräte bzw. -roboter, Fensterputzgeräte bzw. -roboter oder Rasenmähgeräte bzw. -roboter grundsätzlich als Reinigungsgeräte im Sinne der vorliegenden Erfindung zu verstehen.

Wie eingangs bereits erläutert, ist ein Reinigungsgerät im Sinne der vorliegenden Erfindung dazu ausgebildet, autonom in einer Umgebung zu navigieren. Zu diesem Zweck weist ein Reinigungsgerät im Sinne der vorliegenden Erfindung vorzugsweise eine Navigationseinrichtung, eine Datenverarbeitungseinrichtung und eine Steuereinrichtung auf.

Bei dem erfindungsgemäßen Verfahren zum Betreiben eines selbstfahrenden Reinigungsgeräts navigiert das Reinigungsgerät insbesondere mittels der Navigationseinrichtung, der Datenverarbeitungseinrichtung und der Steuereinrichtung autonom in einer bekannten oder unbekannten Umgebung, wobei die Position des Reinigungsgeräts in der Umgebung mittels der Navigationseinrichtung automatisch bestimmt wird.

Mit der Navigationseinrichtung werden Messdaten gemessen, die als Messpunkte in einem Koordinatensystem vorliegen. Die Messpunkte sind jeweils durch zwei Koordinaten, insbesondere kartesische Koordinaten, definiert.

Das Reinigungsgerät führt ein Erkennungsverfahren zum Erkennen einer Delokalisierungssituation durch.

Eine Delokalisierungssituation ist eine Situation, in der ein Verlust einer Bestimmbarkeit der Position, insbesondere einer Bestimmbarkeit der Position mittels der Navigationseinrichtung, besonders bevorzugt mittels eines Lidar-Sensors, entlang zumindest einer Achse droht oder erfolgt ist und/oder in der sich das Reinigungsgerät in einem Korridor befindet oder in einen Korridor zu gelangen droht.

Das vorschlagsgemäße Verfahren zeichnet sich dadurch aus, dass bei dem Erkennungsverfahren eine gerade Hauptlinie in den Messdaten identifiziert wird und analysiert wird, ob die Messdaten eine sich quer, also schräg oder senkrecht, zu der Hauptlinie erstreckende Struktur enthalten, wobei eine Ausdehnung von Strukturen in den Messdaten orthogonal zu der Hauptlinie bestimmt und mit einem insbesondere vordefinierten Grenzwert verglichen wird, und dass es als Delokalisierungssituation gewertet wird, wenn die Messdaten keine Struktur enthalten, deren Ausdehnung größer als der Grenzwert ist bzw. wenn die Ausdehnung aller Strukturen in den Messdaten kleiner oder gleich dem Grenzwert ist. Diese Methode erfordert nur einen geringen Rechenaufwand, sodass eine schnelle Erkennung von Delokalisierungssituationen ermöglicht bzw. erreicht wird. Des Weiteren kann die Sensitivität des Erkennungsverfahrens durch Wahl des Grenzwerts eingestellt werden und hierdurch insbesondere eine Delokalisierungssituation erkannt werden, bevor ein Verlust der bestimmten Position erfolgt.

Vorzugsweise wird eine Lage der Hauptlinie relativ zu dem Koordinatensystem, insbesondere ein Winkel und/oder eine Steigung der Hauptlinie, bestimmt. Dies ermöglicht auf einfache und schnelle Weise die Analyse, ob die Messdaten eine sich quer zu der Hauptlinie erstreckende Struktur enthalten.

Es wird vorzugsweise eine Koordinatentransformation, insbesondere Drehung, der Messdaten durchgeführt, insbesondere sodass die Hauptlinie nach der Koordinatentransformation parallel zu einer Achse des Koordinatensystems ist. Die Koordinatentransformation bzw. Drehung stellt eine einfache und schnell durchführbare mathematische Operation dar, die es erleichtert, zu analysieren, ob die Messdaten eine sich quer zu der Hauptlinie erstreckende Struktur enthalten.

Vorzugsweise wird eine Projektion der Messdaten auf eine Achse orthogonal zu der Hauptlinie bestimmt, insbesondere nach der Koordinatentransformation bzw. Drehung. Diese Projektion kann, insbesondere im Fall einer Projektion nach einer Drehung der Messdaten, sodass die Hauptlinie parallel zu einer Achse des Koordinatensystems ist, einfach und schnell bestimmt bzw. berechnet werden und ermöglicht eine schnelle Analyse, ob die Messdaten eine sich quer zu der Hauptlinie erstreckende Struktur enthalten.

Es ist bevorzugt, dass das Koordinatensystem oder eine Achse des Koordinatensystems orthogonal zu der Hauptlinie in vorzugsweise gleich große Abschnitte unterteilt wird. Weiter wird vorzugsweise ein Abschnitt als besetzt markiert, wenn sich in dem Abschnitt mindestens ein Messpunkt bzw. mindestens eine Projektion eines Messpunkts befindet. Falls sich in einem Abschnitt kein Messpunkt bzw. keine Projektion befindet, wird der Abschnitt vorzugsweise als unbesetzt markiert. Auf diese Weise können auf einfache und schnelle Weise Strukturen in den Messdaten erkannt bzw. hinsichtlich ihrer Ausdehnung analysiert werden.

Vorzugsweise wird die Anzahl von benachbarten als besetzt markierten Abschnitten bestimmt, insbesondere gezählt. Eine effiziente bzw. schnelle Analyse, insbesondere Bestimmung der Ausdehnung von Strukturen orthogonal bzw. quer zur Hauptlinie, wird somit erreicht.

Weiter wird vorzugsweise ein Abschnitt nicht als besetzt markiert und/oder bei der Bestimmung der Anzahl von benachbarten als besetzt markierten Abschnitten nicht als besetzt markierter Abschnitt behandelt, wenn die Anzahl von Messpunkten in dem Abschnitt kleiner oder gleich einem vordefinierten Minimum ist und sich in einem benachbarten Abschnitt oder beiden benachbarten Abschnitten kein Messpunkt befindet. Hierdurch wird die Genauigkeit und/oder Zuverlässigkeit des Erkennungsverfahrens verbessert. Insbesondere kann eine durch Rauschen in den Messdaten bedingte fehlerhafte Analyse vermieden werden.

Messpunkte, die in demselben Abschnitt und/oder in benachbarten Abschnitten liegen, bilden vorzugsweise zusammen eine Struktur. Dies erlaubt eine einfache und schnelle Erkennung und/oder Analyse von Strukturen.

Eine Anzahl von benachbarten als besetzt markierten Abschnitten repräsentiert vorzugsweise eine Ausdehnung einer Struktur orthogonal zu der Hauptlinie. Die Ausdehnung von Strukturen kann somit mit geringem Aufwand und schnell bestimmt werden.

Der Grenzwert ist vorzugsweise durch eine maximale Anzahl von benachbarten als besetzt markierten Abschnitten gebildet. Dies ermöglicht eine Analyse bzw. Bewertung der Strukturen bzw. deren Ausdehnung auf schnelle Weise und mit geringem Aufwand.

Die Hauptlinie wird vorzugsweise mit einem Linienerkennungsalgorithmus identifiziert, insbesondere mit einer Hough-Transformation oder einem RANSAC-Algorithmus. Auf diese Weise kann die Hauptlinie leicht und schnell identifiziert werden.

Der Grenzwert ist vorzugsweise so festgelegt, dass es als Delokalisierungssituation gewertet wird, wenn die Position mittels der Navigationseinrichtung zwar noch bestimmbar ist, aber ein Verlust der Bestimmbarkeit der Position mittels der Navigationseinrichtung droht bzw. kurz bevorsteht. Mit anderen Worten wird also bereits vor dem Verlust der bestimmten Position eine Delokalisierungssituation erkannt. Hierdurch kann ein Verlust der Position effektiv verhindert werden bzw. können rechtzeitig Maßnahmen zum Verhindern des Verlusts der Position getroffen werden.

Vorzugsweise weist die Navigationseinrichtung einen Laserabstandssensor, insbesondere Lidar-Sensor, auf oder besteht daraus. Dies ist einer genauen Positionsbestimmung zuträglich.

Zur Bestimmung der Position des Reinigungsgeräts wird vorzugsweise eine Partikelfilter-Lokalisierung verwendet. Dies ist einer genauen Positionsbestimmung zuträglich.

Es ist bevorzugt, dass das Reinigungsgerät automatisch zu einem anderen Verfahren zur Bestimmung der Position, insbesondere zu einem Odometrie-Verfahren und/oder zu einer Koppelnavigation, wechselt, wenn mit dem Erkennungsverfahren eine Delokalisierungssituation erkannt wird. Ein Verlust der bestimmten Position kann hierdurch verhindert werden.

Weiter ist es bevorzugt, dass das Reinigungsgerät automatisch zum vor der erkannten Delokalisierungssituation verwendeten Verfahren zur Bestimmung der Position, insbesondere zu einer Partikelfilter-Lokalisierung, wechselt, wenn mit dem Erkennungsverfahren keine Delokalisierungssituation mehr erkannt wird. Dies ist einer möglichst genauen Positionsbestimmung zuträglich.

Gemäß einem weiteren, auch unabhängig realisierbaren Aspekt betrifft die vorliegende Erfindung ein selbstfahrendes Reinigungsgerät, das eine Navigationseinrichtung, eine Datenverarbeitungseinrichtung und eine Steuereinrichtung aufweist, um autonom in einer Umgebung zu navigieren, wobei das Reinigungsgerät zur Durchführung des hierin beschriebenen Verfahrens ausgebildet ist.

Gemäß einem weiteren, auch unabhängig realisierbaren Aspekt betrifft die vorliegende Erfindung ein selbstfahrendes Reinigungsgerät, das Mittel aufweist, die so angepasst sind, dass sie das hierin beschriebene Verfahren ausführen.

Gemäß einem weiteren, auch unabhängig realisierbaren Aspekt betrifft die vorliegende Erfindung ein Computerprogramm, aufweisend Befehle, die bei Ausführung bewirken, dass das hierin beschriebene Reinigungsgerät das hierin beschriebene Verfahren ausführt.

Gemäß einem weiteren, auch unabhängig realisierbaren Aspekt betrifft die vorliegende Erfindung ein computerlesbares Medium, auf dem das vorgenannte Computerprogramm gespeichert ist.

Insbesondere werden durch das Reinigungsgerät, das Computerprogramm und das computerlesbare Medium entsprechende Vorteile des Verfahrens erreicht.

Ein Korridor im Sinne der vorliegenden Offenbarung ist insbesondere ein langgestreckter bzw. länglicher Raum, der durch (genau) zwei zumindest im Wesentlichen parallele Objekte, insbesondere Wände, begrenzt ist bzw. der in einer Richtung so weit ausgedehnt ist, dass sich nur (genau) zwei parallele Objekte bzw. Wände im Erfassungsbereich der Navigationseinrichtung des Reinigungsgeräts befinden. Ein Korridor liegt insbesondere vor, wenn sich innerhalb des Erfassungsbereichs der Navigationseinrichtung außer zwei parallelen Objekten bzw. Wänden keine weiteren Objekte befinden.

Eine Delokalisierungssituation im Sinne der vorliegenden Offenbarung ist insbesondere eine Situation, in der die Position, zumindest mittels des im normalen Betrieb des Reinigungsgeräts eingesetzten Verfahrens zur Positionsbestimmung, nicht bestimmbar ist oder in der die Gefahr besteht, dass die Position, zumindest mittels des im normalen Betrieb des Reinigungsgeräts eingesetzten Verfahrens zur Positionsbestimmung, nicht mehr bestimmt werden kann- Eine Delokalisierungssituation liegt insbesondere vor, wenn sich das Reinigungsgerät in einem Korridor befindet.

Eine Hauptlinie im Sinne der vorliegenden Offenbarung ist insbesondere eine Menge von Messdaten, die zumindest im Wesentlichen entlang einer insbesondere geraden Linie angeordnet sind. Eine Hauptlinie ist insbesondere durch eine Menge von Messdaten gebildet, die mathematisch durch eine Linie bzw. Gerade approximiert werden können bzw. die mittels eines Algorithmus zur Erkennung von Linien/Geraden als Linie/Gerade identifiziert werden. Falls die Messdaten mehrere solcher Linien enthalten, ist die Hauptlinie vorzugsweise die erste Linie, die mittels des Algorithmus identifiziert wird und/oder die längste dieser Linien.

Eine Struktur im Sinne der vorliegenden Offenbarung ist insbesondere eine Menge von Messdaten, die nah beieinander liegen bzw. in dem gleichen und/oder benachbarten Abschnitten des Koordinatensystems liegen. Vorzugsweise weisen Messdaten, die eine Struktur bilden, zu Messdaten der gleichen Struktur einen geringeren Abstand auf als zu anderen Messdaten. Vorzugsweise werden bei der vorliegenden Erfindung Strukturen nicht explizit bestimmt bzw. identifiziert, sondern nur mittelbar anhand der Position der Messdaten entlang einer Achse. Messdaten, die eine Struktur bilden, können zu dem gleichen realen bzw. gemessenen Objekt korrespondieren, was jedoch nicht zwingend ist.

Die vorgenannten Aspekte, Merkmale und Verfahrensschritte der vorliegenden Erfindung sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Figuren. Es zeigt:
- Fig. 1: eine schematische perspektivische Darstellung eines vorschlagsgemäßen Reinigungsgeräts;
- Fig. 2: eine schematische Aufsicht eines Reinigungsgeräts in einer Situation, in der eine Position des Reinigungsgeräts mittels einer Navigationseinrichtung bestimmbar ist;
- Fig. 3: eine schematische Aufsicht eines Reinigungsgeräts in einem Korridor bzw. einer Delokalisierungssituation;
- Fig. 4: eine schematische Darstellung von Messdaten einer Navigationseinrichtung des Reinigungsgeräts in einem Koordinatensystem;
- Fig. 5: eine schematische Darstellung der Messdaten aus Fig. 4 nach einer Drehung;
- Fig. 6: eine schematische Darstellung der Messdaten aus Fig. 5, wobei das Koordinatensystem in Abschnitte unterteilt wurde;
- Fig. 7: eine schematische Darstellung von weiteren beispielhaften Messdaten der Navigationseinrichtung in einem in Abschnitte unterteilten Koordinatensystem; und
- Fig. 8: eine schematische Darstellung von noch weiteren beispielhaften Messdaten der Navigationseinrichtung, wobei sich das Reinigungsgerät in einer Korridor- bzw. Delokalisierungssituation befindet.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer wiederholten Beschreibung abgesehen wird.

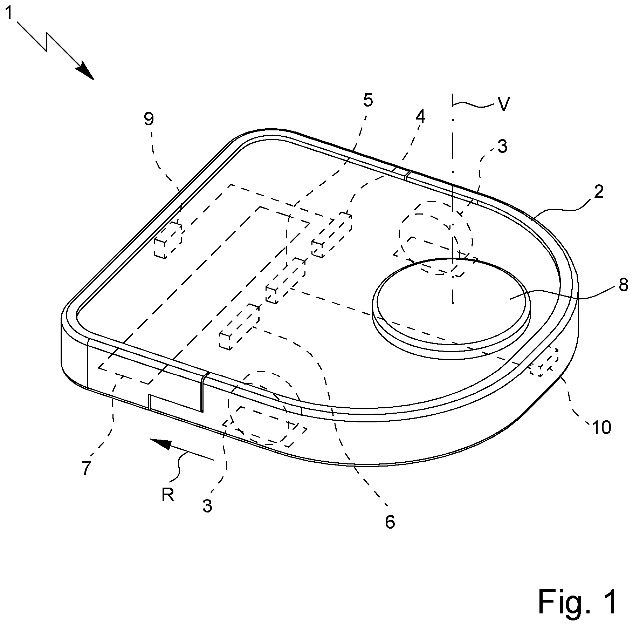

Fig. 1 zeigt ein vorschlagsgemäßes selbstfahrendes (mobiles) Reinigungsgerät 1.

Das Reinigungsgerät 1 ist vorzugsweise als Staubsaugerroboter, Wischroboter oder kombinierter Saug-Wisch-Roboter ausgebildet bzw. dazu ausgebildet, eine Reinigungsfläche während eines Reinigungsvorgangs oder mehrerer Reinigungsvorgänge selbsttätig/autonom abzufahren, um die Reinigungsfläche zu reinigen, insbesondere abzusaugen und/oder zu wischen.

Insbesondere ist das Reinigungsgerät 1 dazu ausgebildet, Sauggut bzw. Luft und/oder ein flüssiges Reinigungsmittel zusammen mit Sauggut von der Reinigungsfläche zu saugen bzw. aufzuwischen.

Ein Reinigungsvorgang im Sinne der vorliegenden Erfindung ist vorzugsweise ein Vorgang, bei dem ein Reinigen der Reinigungsfläche mittels des Reinigungsgeräts 1 erfolgt und/oder bei dem das Reinigungsgerät 1 eine Reinigungsfläche reinigt, insbesondere absaugt und/oder wischt.

Vorzugsweise wird die Reinigungsfläche durch einen Fußboden gebildet. Es ist jedoch auch möglich, dass eine sonstige Fläche, wie ein Fenster oder eine Fassade, die Reinigungsfläche aufweist oder bildet.

Das Reinigungsgerät 1 weist ein Gehäuse 2, mehrere, vorliegend zwei, elektromotorisch angetriebene Räder 3, eine Navigationseinrichtung 4, eine Datenverarbeitungseinrichtung 5 und/oder eine Steuereinrichtung 6 auf.

Mittels der Navigationseinrichtung 4, der Datenverarbeitungseinrichtung 5, der Steuereinrichtung 6 und der Räder 3 kann sich das Reinigungsgerät 1 selbsttätig/autonom innerhalb einer Umgebung bzw. auf der Reinigungsfläche orientieren und fortbewegen.

Die Steuereinrichtung 6 ist vorzugsweise dazu ausgebildet, die Räder 3 bzw. die Elektromotoren des Reinigungsgeräts 1 und/oder das Gebläse des Reinigungsgeräts 1 zu steuern, insbesondere zu aktivieren und/oder zu deaktivieren, und/oder die Leistung anzupassen, vorzugsweise zumindest teilweise automatisch.

Das Reinigungsgerät 1 weist vorzugsweise auf einer Unterseite bzw. einer der Reinigungsfläche zugewandten Seite eine längliche bzw. schlitzartige Ansaugöffnung 7 auf, über die Sauggut und/oder auf die Reinigungsfläche aufgebrachtes Reinigungsmittel aufgenommen bzw. eingesaugt werden kann.

Das Reinigungsgerät 1 ist vorzugsweise mit einem elektromotorisch angetriebenen Gebläse (nicht dargestellt) und einem Sammelbehälter (nicht dargestellt) für das Sauggut ausgestattet.

Im Reinigungsbetrieb bzw. während eines Reinigungsvorgangs kann mittels des Gebläses über diese Ansaugöffnung 7 Sauggut bzw. Luft und/oder Reinigungsmittel zusammen mit Sauggut aus der Umgebung bzw. von der Reinigungsfläche in das Reinigungsgerät 1, insbesondere in den Behälter, gesaugt werden.

Im Falle eines Staubsaugerroboters wird das aufgenommene Sauggut von der Luft abgeschieden, beispielsweise mittels eines Filters (nicht dargestellt), wobei die (gereinigte) Luft anschließend wieder an die Umgebung abgegeben werden kann.

Das Reinigungsgerät 1, insbesondere die Navigationseinrichtung 4, ist vorzugsweise mit mindestens einem Sensor ausgestattet, um die Umgebung, insbesondere Objekte, wie Hindernisse, in der Umgebung zu erfassen und/oder die (relative) Position des Reinigungsgeräts 1 in der Umgebung zu bestimmen, insbesondere durch Messen des Abstands zwischen dem Reinigungsgerät 1 und Referenzpunkten bzw. Objekten in der Umgebung.

Vorzugsweise weist das Reinigungsgerät 1, insbesondere die Navigationseinrichtung 4, mindestens einen Abstandssensor 8 zur Messung der Entfernung zu Objekten der Umgebung auf.

Der Abstandssensor 8 ist vorzugsweise als Laserabstandssensor, insbesondere Lidar-Sensor, PMD-Sensor bzw. Time-of-Flight-Sensor oder Radarsensor, oder als Ultraschallsensor ausgebildet. Besonders bevorzugt ist der Abstandssensor 8 als 2D-Lidar-Sensor ausgebildet.

Der Abstandssensor 8 ist vorzugsweise auf einer Oberseite bzw. auf der der Reinigungsfläche abgewandten Seite des Reinigungsgeräts 1 angeordnet ist.

Der Abstandssensor 8 ist vorzugsweise dazu ausgebildet, die Umgebung des Reinigungsgeräts 1 abzutasten und/oder Objekte der Umgebung des Reinigungsgeräts 1, insbesondere seitlich bzw. horizontal vor, hinter oder neben dem Reinigungsgerät 1, zu erkennen bzw. den Abstand des Reinigungsgeräts 1 zu Objekten der Umgebung zu messen.

Der Abstandssensor 8 ist vorzugsweise zumindest im Wesentlichen horizontal bzw. parallel zur Reinigungsfläche ausgerichtet. Insbesondere ist der Abstandssensor 8 dazu ausgebildet, ausgehend von dem Reinigungsgerät 1 Abstände in alle horizontalen Richtungen bzw. um 360° um das Reinigungsgerät 1 bzw. um eine Vertikalachse V herum zu messen.

Ganz besonders bevorzugt weist der Abstandssensor 8 einen um 360° um die Vertikalachse V des Abstandssensors 8 rotierenden bzw. rotierbaren Laser auf. Vorzugsweise ist der Abstandssensor 8 dazu ausgebildet, dass der Laserstrahl des Lasers mehrmals, beispielsweise fünfmal, pro Sekunde um 360° um die Vertikalachse V rotiert.

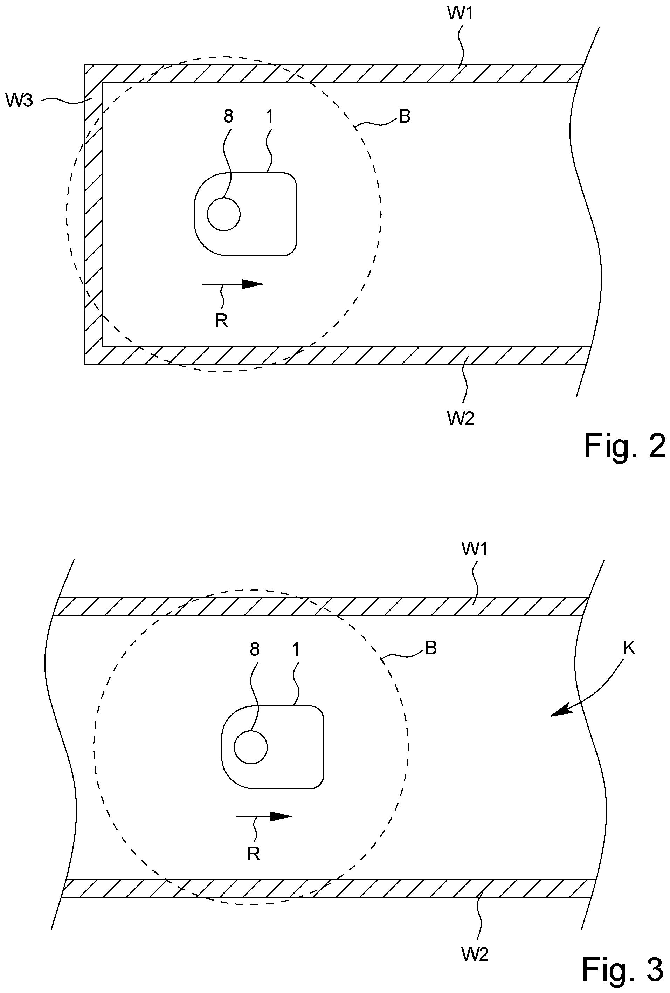

Die Navigationseinrichtung 4, insbesondere der Abstandssensor 8, weist vorzugsweise einen Erfassungsbereich B auf, innerhalb dessen die Navigationseinrichtung 4 bzw. der Abstandssensor 8 Objekte erkennen bzw. Abstände zu Objekten messen kann. Der Erfassungsbereich B kann ein zweidimensionaler Bereich, also ein sich lediglich in einer Ebene erstreckende Bereich, oder ein dreidimensionaler Bereich sein. Der Erfassungsbereich B ist vorzugsweise kreis- bzw. zylinderförmig ausgebildet, wie in Fig. 2 und 3 dargestellt. Der Erfassungsbereich B ist vorzugsweise konzentrisch zu der Vertikalachse V.

Optional kann das Reinigungsgerät 1, insbesondere die Navigationseinrichtung 4, zusätzlich zu dem Abstandssensor 8 einen oder mehrere weitere Sensoren, insbesondere Abstandssensoren, zur Messung der Entfernung zu Objekten der Umgebung aufweisen.

Insbesondere kann das Reinigungsgerät 1 einen weiteren Abstandssensor 9 aufweisen, der in Fahrtrichtung R ausgerichtet ist bzw. dazu ausgebildet ist, in Fahrtrichtung R vor dem Reinigungsgerät 1 befindliche Objekte zu erkennen bzw. den Abstand des Reinigungsgeräts 1 von in Fahrtrichtung R vor dem Reinigungsgerät 1 befindlichen Objekten zu messen.

Vorzugsweise ist der Abstandssensor 9 auf einer Vorderseite des Reinigungsgeräts 1 angeordnet, insbesondere mittig und/oder innerhalb des Gehäuses 2, wie in Fig. 1 dargestellt. Der weitere Abstandssensor 9 ist vorzugsweise als PMD-Sensor bzw. Time-of-Flight-Sensor ausgebildet.

Der Erfassungsbereich B der Navigationseinrichtung 4 ist also vorzugsweise eine Kombination bzw. Superposition der einzelnen Erfassungsbereich der Abstandssensoren der Navigationseinrichtung 5, insbesondere des Abstandssensors 8 und des weiteren Abstandssensors 9. In diesem Fall kann der Erfassungsbereich B abweichend von der beispielhaften Darstellung in Fig. 2 und 3 auch eine andere Form als eine Kreis- oder Zylinderform haben.

Des Weiteren kann das Reinigungsgerät 1 einen Inertialsensor 10 aufweisen, der vorzugsweise als inertiale Messeinheit, kurz IMU, Beschleunigungssensor oder Drehratensensor ausgebildet ist.

Insbesondere ist der Inertialsensor 10 dazu ausgebildet, die Beschleunigung, die Geschwindigkeit, die Kraft und/oder die Drehrate der Bewegung des Reinigungsgeräts 1 und/oder die Orientierung und/oder eine Änderung der Fahrtrichtung R des Reinigungsgeräts 1 zu messen bzw. zu ermitteln.

Optional weist das Reinigungsgerät 1 einen Odometriesensor auf (nicht dargestellt), um die Position und/oder Orientierung des Reinigungsgeräts 1 anhand der Umdrehung der Räder 3 zu ermitteln.

Die Datenverarbeitungseinrichtung 5 ist vorzugsweise dazu ausgebildet, die mittels der Navigationseinrichtung 4 bzw. der Sensoren 8 bis 10 gemessenen bzw. ermittelten Messdaten auszuwerten und/oder als Eingabewerte an die Steuereinrichtung 6 zu übermitteln. Mittels der Steuereinrichtung 6 werden anschließend die Räder 3 angesteuert. Auf diese Weise kann das Reinigungsgerät 1 selbsttätig/autonom innerhalb der Umgebung bzw. auf der Reinigungsfläche navigieren.

Wie eingangs bereits erläutert, ist es für die Navigation erforderlich, dass sich das Reinigungsgerät 1 in der Umgebung bzw. auf der Reinigungsfläche mittels der Navigationseinrichtung 4 bzw. der Sensoren 8 bis 10 lokalisiert bzw. seine Position bestimmt.

Zur Lokalisierung bzw. Positionsbestimmung wird der Abstand zu Referenzpunkten bzw. Objekten, wie einer Wand, mittels der Navigationseinrichtung 4, insbesondere des Abstandssensors 8 und optional des weiteren Abstandssensors 9 gemessen, insbesondere in zwei Richtungen, die orthogonal zueinander sind.

Mittels der Navigationseinrichtung 4, insbesondere des Abstandssensor 8 und optional des weiteren Abstandssensors 9, werden also Messdaten D gemessen. Die Messdaten D der Navigationseinrichtung 4 liegen insbesondere als Messpunkte in einem Koordinatensystem vor, wobei die Messdaten D bzw. Messpunkte jeweils (mindestens) zwei Koordinaten, insbesondere kartesische Koordinaten aufweisen. Mit anderen Worten ist jeder Messpunkt vorzugsweise durch zwei Koordinaten, insbesondere einen X-Wert und einen Y-Wert, definiert.

Das Reinigungsgerät 1 ist vorzugsweise zur Durchführung des hierin beschriebenen Verfahrens zum Betrieb des Reinigungsgeräts 1 ausgebildet. Vorzugsweise weist das Reinigungsgerät 1 Mittel, insbesondere die Datenverarbeitungseinrichtung 5 und/oder Steuereinrichtung 6, auf, die dazu angepasst sind, das hierin beschriebene Verfahren durchzuführen.

Das Reinigungsgerät 1, insbesondere die Datenverarbeitungseinrichtung 5 und/oder Steuereinrichtung 6, weist vorzugsweise ein Computerprogramm auf, welches Befehle aufweist, die bei Ausführung die Durchführung des hierin beschriebenen Verfahrens bewirken.

Das Reinigungsgerät 1, insbesondere die Datenverarbeitungseinrichtung 5 und/oder Steuereinrichtung 6, weist vorzugsweise ein computerlesbares Medium auf, auf dem das vorgenannte Computerprogramm gespeichert ist.

Nachfolgend wird das vorschlagsgemäße Verfahren anhand der Figuren 2 bis 8 näher erläutert.

Das Verfahren dient zum Betrieb des Reinigungsgeräts 1 und wird vorzugsweise mittels des Reinigungsgeräts 1 durchgeführt.

Das Reinigungsgerät 1, insbesondere die Datenverarbeitungseinrichtung 5, ist vorzugsweise zur Ausführung des hierin beschriebenen Verfahrens bzw. einzelner Verfahrensschritte ausgebildet.

Vorzugsweise sind Befehle bzw. ist der Algorithmus zur Ausführung des vorschlagsgemäßen Verfahrens bzw. einzelne Verfahrensschritte des vorschlagsgemäßen Verfahrens elektronisch in einem (Daten-)Speicher des Reinigungsgeräts 1, insbesondere der Datenverarbeitungseinrichtung 5, gespeichert.

Das vorschlagsgemäße Verfahren beinhaltet vorzugsweise einen oder mehrere Verfahrensschritte und/oder ein Programm, um die Positionsbestimmung bzw. Lokalisierung des Reinigungsgeräts 1 insbesondere in einer weitläufigen Umgebung, wie einer Halle oder in einem Flur, zu verbessern.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Reihenfolge durchgeführt werden können, sofern im Folgenden nicht anders erläutert. Insbesondere sind einige der nachfolgend erläuterten Verfahrensschritte nicht zwingend, sondern können auch weggelassen werden.

Bei dem vorschlagsgemäßen Verfahren navigiert das Reinigungsgerät 1 autonom in einer Umgebung navigiert und bestimmt seine Position in der Umgebung mittels der Navigationseinrichtung 4, insbesondere auf Basis von mit dem Abstandssensor 8 und optional dem weiteren Abstandssensor 9 durchgeführten Messungen bzw. auf Basis von Messdaten D der Navigationseinrichtung 4 bzw. des Abstandssensors 8 und optional des Abstandssensors 9.

Als Verfahren zur Bestimmung der Position des Reinigungsgeräts 1 wird vorzugsweise eine Partikelfilter-Lokalisierung verwendet.

Vorzugsweise wird ein Erkennungsverfahren zum Erkennen einer Delokalisierungssituation durchgeführt.

Mit dem Erkennungsverfahren soll erkannt werden, wenn mittels der Messdaten D der Navigationseinrichtung 4 bzw. des Abstandssensors 8,9 die Position nicht mehr bestimmbar ist oder ein Verlust der Bestimmbarkeit der Position mittels dieser Messdaten D droht. Insbesondere soll erkannt werden, wenn ein Verlust der Bestimmbarkeit der Position mittels des im normalen Betrieb verwendeten Verfahrens zur Bestimmung der Position, insbesondere als mittels der Partikelfilter-Lokalisierung, droht oder erfolgt ist.

Eine Delokalisierungssituation ist also insbesondere eine Situation, in der ein Verlust einer Bestimmbarkeit der Position, insbesondere mittels der Messdaten D der Navigationseinrichtung 4, entlang zumindest einer Achse droht oder erfolgt ist und/oder in der sich das Reinigungsgerät 1 in einem Korridor K befindet oder in einen Korridor K zu gelangen droht.

Zur Erläuterung einer Delokalisierungssituation zeigen die Figuren 2 und 3 zwei Beispiele von möglichen Situationen bzw. Umgebungen des Reinigungsgeräts 1.

In Fig. 2 ist das Reinigungsgerät 1 von drei Wänden W1, W2, W3 umgeben bzw. befinden sich im Erfassungsbereich B der Navigationseinrichtung 4 bzw. des Abstandssensors 8 drei Wände W1, B2, W3. In dieser Situation liegen genügend Informationen bzw. Messdaten vor, um die Position des Reinigungsgeräts 1 in seiner Umgebung zu bestimmen, insbesondere da sich in drei verschiedenen Richtungen ausgehend von dem Reinigungsgerät 1 bzw. der Navigationseinrichtung 4 Objekte im Erfassungsbereich B befinden, nämlich die Wände W1, W2, W3.

In Fig. 3 ist eine Situation dargestellt, in der sich das Reinigungsgerät 1 in einem Korridor K befindet.

Ein Korridor ist insbesondere ein lang gestreckter Raum, der durch zwei zumindest im Wesentlichen parallele Wände W1, W2 begrenzt ist. Insbesondere liegt ein Korridor vor, wenn sich etwaige weitere Wände, die den Raum begrenzen (wie beispielsweise die Wand W3 in Fig. 2), so weit auseinander bzw. so weit weg von dem Reinigungsgerät 1 befinden, dass sie außerhalb des Erfassungsbereichs B der Navigationseinrichtung 4 bzw. des Abstandssensor 8 liegen. Das Reinigungsgerät 1 befindet sich also insbesondere dann in einem Korridor K, wenn sich ausschließlich parallele Wände W1, W2, insbesondere höchstens oder genau zwei Wände W1, W2, in dem Erfassungsbereich B der Navigationseinrichtung 4 bzw. des Abstandssensor 8 befinden und/oder wenn sich außer den parallelen Wänden W1, W2 keine weiteren Objekte in dem Erfassungsbereich B befinden.

Wenn sich das Reinigungsgerät 1 in einem Korridor K befindet, sind Messdaten D, die (bei einem gegebenen bzw. festen Abstand von den Wänden W1, W2) in verschiedenen Positionen entlang der Längsrichtung des Korridors K in Fig. 3 gemessen werden, zumindest im Wesentlichen identisch bzw. ununterscheidbar. Folglich lässt sich die Position des Reinigungsgeräts 1, in Fig. 3 also die Position entlang des Korridors, nicht bestimmen.

In Fig. 3 liegt somit eine Delokalisierungssituation vor.

Das hierin beschriebene Verfahren bzw. Erkennungsverfahren dient insbesondere zur verlässlichen und/oder schnellen Erkennung einer Delokalisierungssituation.

Vorzugsweise wird das Erkennungsverfahren beim Betrieb des Reinigungsgeräts 1 kontinuierlich und/oder in regelmäßigen Abständen durchgeführt.

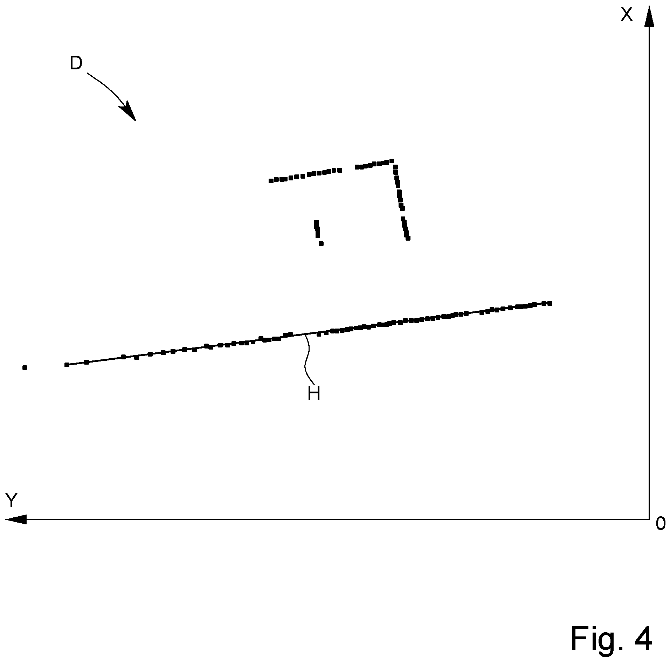

Das Erkennungsverfahren zur Erkennung einer Delokalisierungssituation wird insbesondere anhand der Figuren 4 bis 8 näher erläutert.

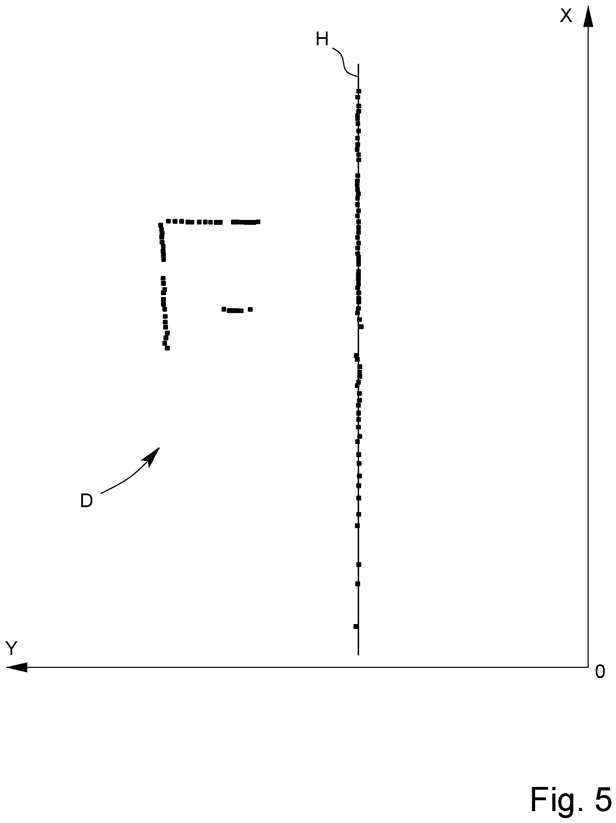

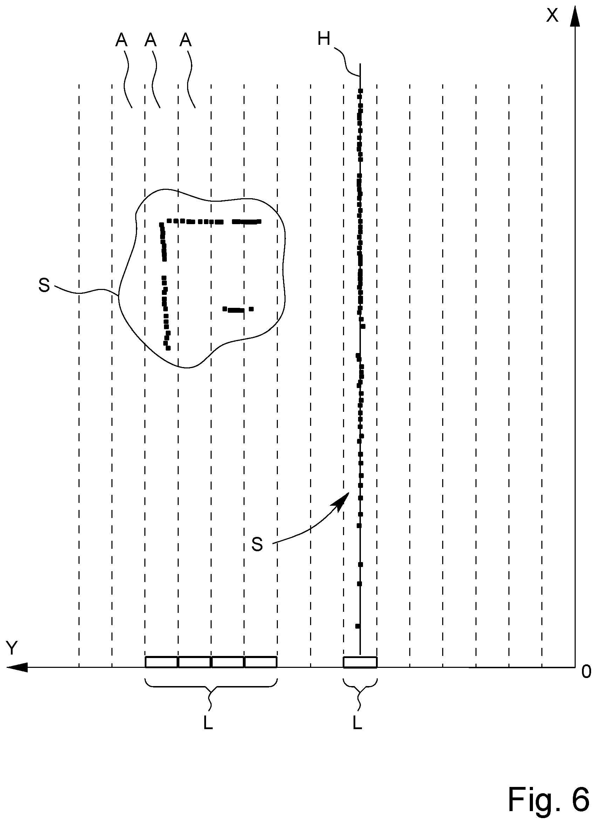

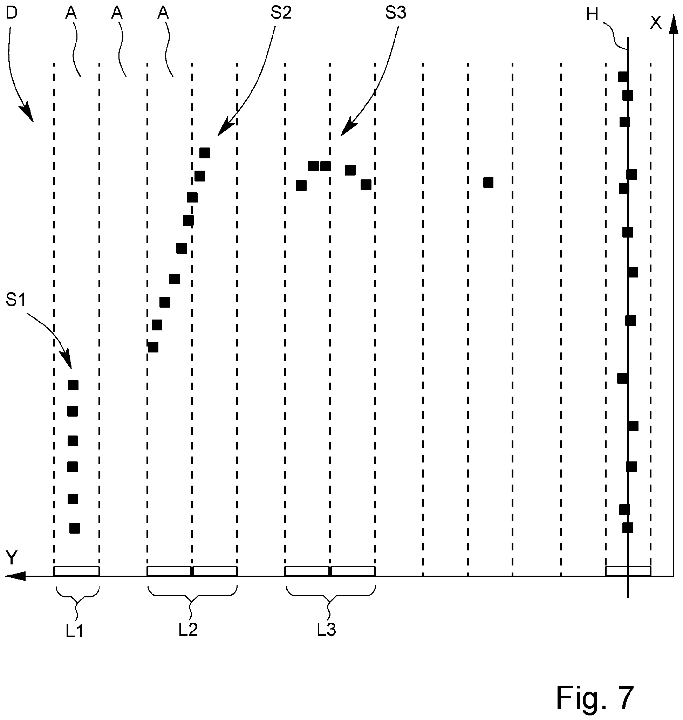

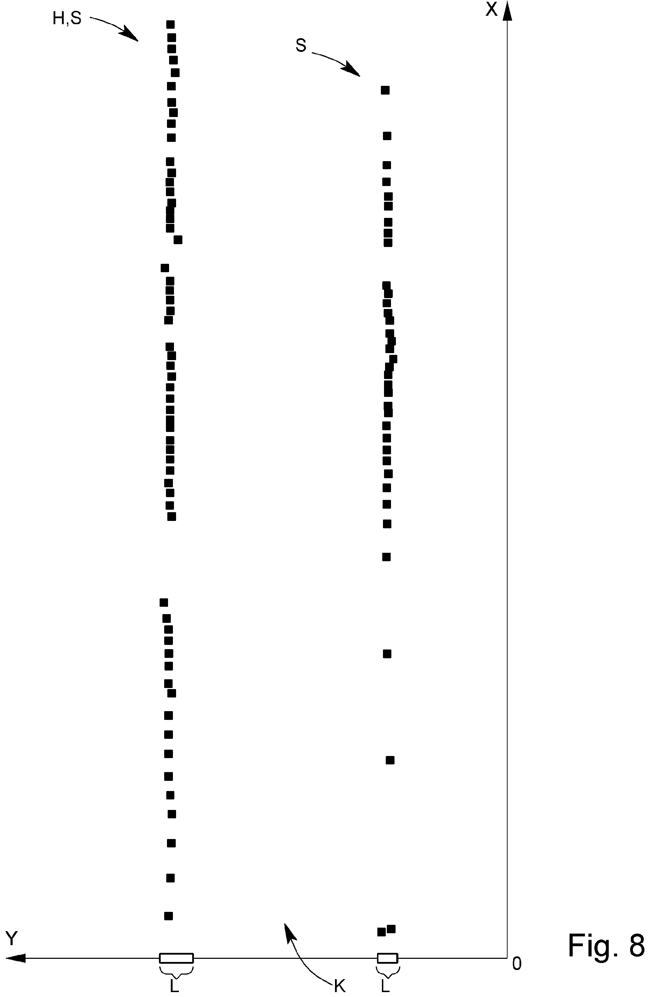

In Fig. 4 sind beispielhafte Messdaten D der Navigationseinrichtung 4, insbesondere des Abstandssensor 8 dargestellt. Die Figuren 5 und 6 zeigen in anderen, unten näher erläuterten Darstellungen die gleichen Messdaten D wie Fig. 4. In Fig. 7 und 8 sind jeweils andere beispielhafte Messdaten D gezeigt.

Bei dem Erkennungsverfahren wird zunächst eine Hauptlinie H in den Messdaten D identifiziert. Mit anderen Worten wird also vorzugsweise identifiziert bzw. erkannt, ob und welche der Messpunkte zumindest im Wesentlichen auf einer (insbesondere geraden) Linie liegen. Dies erfolgt vorzugsweise mittels eines Linienerkennungsalgorithmus, insbesondere mit einer Hough-Transformation oder einem RANSAC-Algorithmus.

Die Hauptlinie H ist insbesondere eine Gerade.

Insbesondere wird nur eine bzw. genau eine Linie in den Messdaten D als Hauptlinie H identifiziert. Außer der Hauptlinie H werden also vorzugsweise keine weiteren Linien identifiziert.

Mit anderen Worten ist die Hauptlinie H daher vorzugsweise die erste und/oder einzige Linie, die in den Messdaten D identifiziert wird. Nach der Identifizierung einer Linie bzw. der Hauptlinie H in den Messdaten D werden vorzugsweise keine weiteren Linien in den Messdaten D identifiziert.

Das Verfahren zur Identifizierung von Linien bzw. der Hauptlinie, insbesondere der Linienerkennungsalgorithmus, wird also vorzugsweise beendet bzw. abgebrochen, sobald eine Linie bzw. die Hauptlinie H identifiziert wurde. Dies ist einem schnellen Verfahrensablauf bzw. einer schnellen Erkennung von Delokalisierungssituationen zuträglich.

Dementsprechend muss die Hauptlinie H sich nicht durch besondere Eigenschaften von etwaigen anderen Linien in den Messdaten D unterscheiden. Der Begriff "Hauptlinie" bezeichnet daher keine besonders ausgezeichnete Linie, sondern dient lediglich zur begrifflichen Unterscheidung der zu Beginn des Erkennungsverfahrens identifizierten Linie von anderen Linien.

Ein Vorteil des hier beschriebenen Verfahrens ist, dass es für das Erkennungsverfahren unerheblich ist, welche Linie als Hauptlinie H identifiziert wird, wenn die Messdaten D mehrere Linien aufweisen bzw. in den Messdaten grundsätzlich mehrere Linien identifizierbar wären. Dies erlaubt es, auf die Identifizierung weiterer Linien oder sonstige weiteren Untersuchungen der Messdaten D hinsichtlich des Vorhandenseins etwaiger weiterer Linien zu verzichten, sodass das Erkennungsverfahren sehr schnell durchgeführt werden kann.

Falls keine Hauptlinie H identifiziert werden kann, wird dies vorzugsweise als Delokalisierungssituation gewertet.

Des Weiteren wird analysiert, ob die Messdaten D eine Struktur S enthalten, die sich quer, also insbesondere schräg oder senkrecht, zu der Hauptlinie H erstreckt. Insbesondere werden hierzu Strukturen S in den Messdaten D nicht direkt bzw. unmittelbar bestimmt oder identifiziert, sondern es wird lediglich eine Analyse der Messdaten D vorgenommen, die es erlaubt, eine Erstreckung von Strukturen S orthogonal zu Hauptlinie H zu bestimmen.

Der Begriff "quer" im Sinne der vorliegenden Offenbarung bedeutet insbesondere "schräg oder senkrecht", also "in einem Winkel von 90° oder weniger".

Wenn die Analyse ergibt, dass die Messdaten D keine Struktur S aufweisen, die sich quer zu der Hauptlinie H erstreckt, wird dies als Delokalisierungssituation gewertet.

Eine "sich quer zur Hauptlinie H erstreckende Struktur S" ist insbesondere eine Struktur, die hinreichend weit ausgedehnt ist bzw. durch die es ermöglicht wird, die Position des Reinigungsgeräts 1 parallel zu der Hauptlinie H zu bestimmen. In diesem Sinne sind Strukturen S, die sich zwar in geringem Maße quer zu der Hauptlinie erstrecken, aber keine Bestimmung der Position des Reinigungsgeräts 1 parallel zu der Hauptlinie H ermöglichen bzw. erlauben, vorzugsweise keine sich quer zu der Hauptlinie H erstreckende Strukturen S.

Besonders bevorzugt wird zur Analyse, ob die Messdaten D eine sich quer zu der Hauptlinie H erstreckende Struktur S aufweisen, eine Ausdehnung L von Strukturen S orthogonal zu der Hauptlinie H zumindest mittelbar bestimmt und mit einem Grenzwert verglichen. Der Grenzwert ist vorzugsweise ein fester bzw. vordefinierter Wert, insbesondere eine feste bzw. vordefinierte Zahl.

Nachfolgend wird insbesondere ein bevorzugtes Verfahren zur Analyse, ob die Messdaten D eine sich quer zu der Hauptlinie H erstreckende Struktur S aufweisen bzw. zur Bestimmung einer Ausdehnung L von Strukturen S orthogonal zu der Hauptlinie H näher erläutert.

Vorzugsweise wird die Lage der Hauptlinie H, insbesondere relativ zu dem Koordinatensystem, bestimmt. Hierzu wird insbesondere der Winkel der Hauptlinie H zu einer oder mehrerer Achsen des Koordinatensystems und/oder die Steigung der Hauptlinie H bestimmt, insbesondere berechnet.

Vorzugsweise wird eine Koordinatentransformation der Messdaten D, insbesondere eine Drehung der Messdaten D, durchgeführt. Die Koordinatentransformation bzw. Drehung erfolgt ganz besonders auf Basis der zuvor bestimmten Lage der Hauptlinie H relativ zu dem Koordinatensystem und/oder derart, dass die Hauptlinie H nach der Koordinatentransformation bzw. Drehung parallel zu einer Achse des Koordinatensystems ist.

Das Ergebnis der Koordinatentransformation bzw. Drehung ist insbesondere in Fig. 5 dargestellt. In Fig. 5 wurden die Messdaten D aus Fig. 4 so transformiert bzw. gedreht, dass die Hauptlinie H parallel zu einer Achse des Koordinatensystems, im Darstellungsbeispiel parallel zu der X-Achse, ist.

Vorzugsweise werden die Messdaten D auf eine orthogonal zu der Hauptlinie H verlaufende Achse projiziert bzw. wird eine Projektion der Messdaten D auf eine orthogonal zu der Hauptlinie H verlaufende Achse, insbesondere eine Achse des Koordinatensystems, zumindest mittelbar bestimmt, insbesondere berechnet. Dies erfolgt vorzugsweise, jedoch nicht zwingend, nach der zuvor erläuterten Koordinatentransformation bzw. Drehung.

Im Darstellungsbeispiel gemäß Fig. 5, in dem die Messdaten D aus Fig. 4 so gedreht wurden, dass die Hauptlinie H parallel zu einer Achse des Koordinatensystems ist, kann die Projektion der Messdaten D besonders einfach und schnell bestimmt werden. In diesem Fall ist die Projektion der Messdaten D bzw. Messpunkte nämlich durch direkt durch eine der Koordinaten der gedrehten Messdaten D bzw. Messpunkte gegeben, im Darstellungsbeispiel durch die Y-Koordinate der Messpunkte. Weitere Rechenschritte sind zur Bestimmung der Projektion nicht erforderlich.

Grundsätzlich ist es jedoch nicht zwingend, dass die Messdaten D vor der Projektion koordinatentransformiert bzw. gedreht werden und es ist auch nicht zwingend, dass die Achse, auf die Messdaten D projiziert werden, eine Achse des Koordinatensystems ist. Vielmehr kann eine Projektion der Messdaten D auch ohne vorherige Koordinatentransformation und auf eine beliebige Achse, also auch eine schräg zu den Achsen des Koordinatensystems verlaufende Achse, bestimmt werden. Jedoch wird stets eine Projektion der Messdaten D auf eine orthogonal zu der Hauptlinie H verlaufende Achse bestimmt.

Das Koordinatensystem bzw. dessen zur Hauptlinie H orthogonale Achse (im Darstellungsbespiel also die Y-Achse) wird vorzugsweise in Abschnitte A unterteilt. Dies gestattet insbesondere eine einfache und/oder mit wenig Rechenaufwand verbundene Analyse, ob die Messdaten D eine sich quer zu der Hauptlinie H erstreckende Struktur S enthalten.

Die Abschnitte A sind vorzugsweise identisch bzw. gleich groß.

Die Unterteilung in Abschnitte A erfolgt in einer Richtung orthogonal zu der Hauptlinie H. Mit anderen Worten erstrecken sich die Abschnitte A also parallel zu der Hauptlinie H und/oder folgen die Abschnitte A orthogonal zu der Hauptlinie H aufeinander.

Fig. 6 zeigt die (gedrehten) Messdaten D aus Fig. 5, wobei zusätzlich die Abschnitte A dargestellt sind. Die Abschnitte A sind jeweils durch die gestrichelten vertikalen Linien getrennt, auch wenn nicht jeder einzelne Abschnitt in Fig. 6 mit dem Bezugszeichen A versehen ist. Das gleiche gilt für Fig. 7, in der beispielhaft andere Messdaten D als in Fig. 4 gezeigt sind.

Vorzugsweise erfolgt eine Markierung von Abschnitten A als besetzt und/oder unbesetzt.

Insbesondere wird ein Abschnitt A als besetzt markiert, wenn sich in dem Abschnitt A ein Messpunkt bzw. dessen Projektion befindet. Wenn sich in einem Abschnitt A kein Messpunkt bzw. keine Projektion eines Messpunkts befindet, wird der Abschnitt A vorzugsweise als unbesetzt markiert.

In den Figuren 6 bis 8 sind als besetzt markierte Abschnitte jeweils durch Kästchen an der Y-Achse visualisiert.

Das Markieren der Abschnitte A erfolgt vorzugsweise nach der Bestimmung der Projektion der Messpunkte bzw. anhand der Projektionen der Messpunkte. Dies ist jedoch nicht zwingend. Grundsätzlich ist auch möglich, keine Projektion der Messpunkte durchzuführen und anhand der Messpunkte direkt zu bestimmen, welche Abschnitte A besetzt sind bzw. in welchen Abschnitten sich Messpunkte befinden.

Es ist nicht zwingend, sowohl besetzte als auch unbesetzte Abschnitte A zu markieren. Grundsätzlich ist es ausreichend, wenn entweder nur besetzte Abschnitte A oder nur unbesetzte Abschnitte A markiert werden, da auf diese Weise die jeweils nicht markierten Abschnitte A automatisch als unbesetzt oder besetzt gelten.

Im Sinne der vorliegenden Erfindung bilden mehrere Messpunkte vorzugsweise eine Struktur S, wenn sie bzw. ihre Projektionen in demselben und/oder in benachbarten Abschnitten A liegen. Mit anderen Worten ist eine Struktur S im Sinne der vorliegenden Erfindung also vorzugsweise durch Messpunkte gebildet, die bzw. deren Projektionen in demselben Abschnitt und/oder in benachbarten Abschnitten A liegen.

Insbesondere bildet also auch die Hauptlinie H eine Struktur S, wie insbesondere in Fig 5/6 kenntlich gemacht ist. Des Weiteren sind in Fig. 7, die beispielhaft andere Messdaten D als die Figuren 5 und 6 zeigt, verschiedene Strukturen S1, S2, S3 beispielhaft gekennzeichnet.

Vorzugsweise wird die Anzahl von benachbarten als besetzt markierten Abschnitten A bestimmt, insbesondere gezählt. So kann auf sehr schnell die Ausdehnung L von Strukturen S quer bzw. orthogonal zu der Hauptlinie H in den Messdaten D bestimmt werden. Insbesondere ist hierzu eine explizite Bestimmung oder nähere Untersuchung der Strukturen S nicht erforderlich.

Die Ausdehnung L einer Struktur S quer bzw. orthogonal zu der Hauptlinie H im Sinne der vorliegenden Erfindung ist vorzugsweise die Anzahl der Abschnitte A, die die Struktur S aufweist bzw. aus denen die Struktur S besteht. Mit anderen Worten repräsentiert also die Anzahl von benachbarten als besetzt markierten Abschnitten A die Ausdehnung L einer Struktur S orthogonal zu der Hauptlinie H.

Es ist bevorzugt, dass ein Abschnitt A nicht als besetzt markiert wird und/oder bei der Bestimmung bzw. Zählung der Anzahl von benachbarten als besetzt markierten Abschnitten A nicht als besetzt markierter Abschnitt A behandelt bzw. gezählt wird, wenn die Anzahl der Messpunkte bzw. Projektionen in dem Abschnitt A kleiner oder gleich einem Minimum ist und/oder wenn sich in einem oder beiden benachbarten Abschnitten A keine Messpunkte bzw. Projektionen befinden.

Das vorgenannte Minimum kann insbesondere 1 betragen. Mit anderen Worten ist es besonders bevorzugt, dass ein Abschnitt A nicht als besetzt markiert wird und/oder bei der Bestimmung bzw. Zählung der Anzahl von benachbarten als besetzt markierten Abschnitten A nicht als besetzt markierter Abschnitt A behandelt bzw. gezählt wird, wenn sich in dem Abschnitt A nur ein Messpunkt bzw. dessen Projektion befindet und/oder wenn sich in einem oder beiden benachbarten Abschnitten A keine Messpunkte bzw. Projektionen befinden. Auf diese Weise kann verhindert werden, dass ein Abschnitt A als besetzt markiert bzw. gezählt wird, in denen Messpunkte nicht zu realen Objekten in der Umgebung des Reinigungsgeräts 1 korrespondieren, sondern Rauschen darstellen.

In Fig. 7 sind beispielhaft Messdaten D gezeigt, die zwischen der Struktur S3 und der Hauptlinie H einen Abschnitt A aufweisen, in dem sich ein einzelner Messpunkt befindet. Dieser Abschnitt wird gemäß der vorigen Erläuterung vorzugsweise nicht als besetzt markiert bzw. bei der Bestimmung bzw. Zählung der Anzahl von benachbarten als besetzt markierten Abschnitten A nicht als besetzt markierter Abschnitt A behandelt bzw. gezählt.

Die Anzahl von benachbarten als besetzt markierten Abschnitten A der Strukturen S, also die Ausdehnung L der Strukturen S, wird vorzugsweise mit einem insbesondere vordefinierten Grenzwert verglichen.

Insbesondere ist der Grenzwert eine (vorab festgelegte) Zahl, die mit der Anzahl von Abschnitten A, aus denen eine Struktur S besteht bzw. die eine Struktur S aufweist, verglichen wird. Mit anderen Worten ist der Grenzwert vorzugsweise durch eine maximale Anzahl von benachbarten als besetzt markierten Abschnitten A gebildet.

Wenn die Ausdehnung L bzw. Anzahl von benachbarten als besetzt markierten Abschnitten A einer Struktur S größer als der Grenzwert ist, bedeutet dies insbesondere, dass die Struktur S sich quer zu der Hauptlinie H erstreckt. Wenn die Ausdehnung L bzw. Anzahl von benachbarten als besetzt markierten Abschnitten A einer Struktur S kleiner oder gleich dem Grenzwert ist, bedeutet dies insbesondere, dass die Struktur S zumindest im Wesentlichen parallel zu der Hauptlinie H ist.

Falls keine Struktur S eine Ausdehnung L bzw. die Anzahl von benachbarten als besetzt markierten Abschnitten A aufweist, die größer als der Grenzwert ist, ist das Ergebnis der Analyse also insbesondere, dass die Messdaten D keine sich quer zu der Hauptlinie H erstreckende Struktur S enthalten.

Es wird also vorzugsweise als Delokalisierungssituation gewertet, wenn die Messdaten D keine sich quer zu der Hauptlinie H erstreckende Struktur S enthalten bzw. wenn die Ausdehnung L aller Strukturen S in den Messdaten D kleiner oder gleich dem Grenzwert ist bzw. wenn die Messdaten D keine Struktur S enthalten, deren Ausdehnung L größer als der Grenzwert ist.

Außer der erläuterten Bestimmung und Zählung von besetzten Abschnitten und dem anschließenden Vergleich mit einem Grenzwert erfolgt vorzugsweise keine weitere Analyse der Messdaten D hinsichtlich etwaig darin enthaltenen Strukturen S. Auf diese Weise kann das Erkennungsverfahren sehr schnell und mit wenigen Rechenschritten bzw. geringem Rechenaufwand durchgeführt werden.

Die Figuren 5 bis 8 zeigen verschiedene Messdaten D. In den Figuren 5/6 und 7 liegt keine Delokalisierungssituation vor. In Fig. 8 hingegen liegt eine Delokalisierungssituation vor bzw. befindet sich das Reinigungsgerät 1 in einem Korridor K.

In Fig. 5/6 ist erkennbar, dass die Messdaten D eine Hauptlinie H als Struktur S und eine weitere Struktur S aufweisen. Die Messdaten D der weiteren Struktur S liegen in direkt benachbarten Abschnitten A, sodass sie gemeinsam eine Struktur S bilden.

Offensichtlich erstreckt sich die Struktur S (auch) quer zur Hauptlinie H bzw. weist die Struktur S eine relativ große Ausdehnung L orthogonal zur Hauptlinie H auf. In diesem Fall ergibt das Erkennungsverfahren bzw. die Analyse (bei einem sinnvoll gewählten Grenzwert) daher, dass die Messdaten D eine sich quer zur Hauptlinie H erstreckende Struktur S aufweisen.

Somit liegt in Fig. 5/6 keine Delokalisierungssituation vor, sondern die Position des Reinigungsgeräts 1 ist, insbesondere aufgrund der Struktur S, (eindeutig) bestimmbar.

In Fig. 7 weisen die Messdaten D neben der Hauptlinie H mehrere verschiedene Strukturen S1, S2, S3 auf. Alle Messdaten D der Struktur S1 befinden sich im selben AbschnittA. Die Struktur S1 verläuft mit anderen Worten also parallel zur X-Richtung bzw. Hauptlinie H. Die voranstehend erläuterte Analyse ergibt bei der Struktur S1 daher, dass sich die Struktur S1 nicht quer zur Hauptlinie H erstreckt. Die Strukturen S2 und S3 hingegen erstrecken sich über mehrere Abschnitte A und somit quer zu der Hauptlinie H. Die Analyse ergibt daher (bei einem entsprechend gewählten Grenzwert) insgesamt, dass die Messdaten D aus Fig. 7 mindestens eine sich quer zur Hauptlinie H erstreckende Struktur S aufweist und somit keine Delokalisierungssituation vorliegt.

In Fig. 8 hingegen weisen die Messdaten D als einzige Struktur S neben der Hauptlinie H eine weitere gerade Linie auf, deren Messdaten D alle im gleichen Abschnitt A liegen. Die Struktur S bzw. Linie verläuft parallel zur Hauptlinie H und erstreckt sich damit nicht quer zu der Hauptlinie H. In Fig. 8 liegt folglich eine Delokalisierungssituation bzw. ein Korridor K vor. Die Messdaten aus Fig. 8 korrespondieren insbesondere zu der in Fig. 3 dargestellten Situation bzw. Umgebung des Reinigungsgeräts 1.

Insbesondere an Fig. 5/6 zeigt sich ein Vorteil der beschriebenen nur indirekten Bestimmung von Strukturen S über die Bestimmung der Ausdehnung L bzw. Anzahl von benachbarten als besetzt markierten Abschnitten A: Ein menschlicher Betrachter würde in Fig. 5/6 außer der Hauptlinie H mindestens zwei weitere Strukturen S erkennen, nämlich die kurze Linie in Y-Richtung und den Winkel mit einer Linie in X-Richtung und einer Linie in Y-Richtung, wobei je nach Sichtweise bzw. Zählung der Winkel auch als zwei Strukturen S aufgefasst werden könnte, nämlich die beiden Linien in X- und Y-Richtung. Solche Unterscheidungen wären jedoch mit einem höheren Analyse- bzw. Rechenaufwand verbunden und für die Zwecke der vorliegenden Erfindung nicht hilfreich: Entscheidend ist ausschließlich das Vorhandensein mindestens einer Struktur S quer zur Hauptlinie H, da dies bereits hinreichend für die Bestimmbarkeit der Position des Reinigungsgeräts 1 ist.

Das Erkennungsverfahren kann jedoch auch anders als voranstehend beschrieben ausgestaltet sein.

Beispielsweise ist es möglich, dass bei dem Erkennungsverfahren zusätzlich zu der Hauptlinie H weitere gerade Linien in den Messdaten D identifiziert werden und die Steigungen der Hauptlinie H und der weiteren Linien und/oder Winkel der Linien zu einer Achse des Koordinatensystems bestimmt und insbesondere verglichen werden. Auch auf diese Weise kann festgestellt werden, ob die Messdaten D mindestens eine sich quer zu einer Hauptlinie H erstreckende Struktur S enthalten. Wenn die Messdaten D nämlich eine weitere Linie enthalten, deren Steigung sich signifikant von der Steigung der Hauptlinie H unterscheidet, dann stellt diese weitere Linie eine sich quer zu der Hauptlinie H erstreckende Struktur S dar und es liegt keine Delokalisierungssituation vor. Falls eine oder mehrere weitere identifizierte Linien zumindest im Wesentlichen die gleiche Steigung wie die Hauptlinie H aufweisen, also zumindest im Wesentlichen parallel zu der Hauptlinie H sind, enthalten die Messdaten D keine sich quer zu der Hauptlinie H erstreckende Struktur S, sondern es liegt eine Delokalisierungssituation, insbesondere ein Korridor K, vor.

Die Bestimmung der Steigung von Linien in den Messdaten D stellt insbesondere zumindest mittelbar eine Bestimmung der Ausdehnung L von Strukturen S orthogonal zu der Hauptlinie H dar, da die Steigung zumindest mittelbar ein Maß für die Ausdehnung L bzw. Erstreckung der Linien und orthogonal zu der Hauptlinie H darstellt. Der Grenzwert, mit dem die Ausdehnung L von Strukturen S verglichen wird, kann in diesem Fall durch eine bestimmte Steigung gebildet sein. Beispielsweise kann der Grenzwert so festgelegt sein, dass es als Delokalisierungssituation gewertet wird, wenn keine Linie in den Messdaten D identifiziert wird, der Steigung sich mehr als einen bestimmten Prozentsatz oder Winkel von der Steigung der Hauptlinie H unterscheidet, beispielsweise einen Winkel von 1°, 3° oder 5°.

Zur Bestimmung der Ausdehnung L von Strukturen S bzw. weiteren identifizierten Linien in den Messdaten D könnte zusätzlich zu der Steigung auch die Länge der jeweiligen Linie bestimmt bzw. berücksichtigt werden.

Wie bereits erläutert, wird das Erkennungsverfahren während des Betriebs des Reinigungsgeräts 1 vorzugsweise mehrfach und/oder kontinuierlich durchgeführt bzw. wiederholt.

Der Grenzwert ist vorzugsweise so festgelegt bzw. definiert, dass eine Delokalisierungssituation erkannt bzw. eine bestimmte Situation mittels des Erkennungsverfahrens als Delokalisierungssituation eingestuft wird, wenn die Position mittels der Navigationseinrichtung 4 bzw. mittels des Abstandssensors 8, 9 zwar noch bestimmbar ist, aber ein Verlust der Bestimmbarkeit der Position mittels der Navigationseinrichtung 4 bzw. mittels des Abstandssensors 8, 9 droht bzw. kurz bevorsteht. Hierzu ist der Grenzwert vorzugsweise entsprechend groß gewählt.

Auf diese Weise können rechtzeitig Maßnahmen zum Verhindern eines Verlusts der bestimmten Position ergriffen werden, beispielsweise indem das Messgerät 1 angehalten wird oder auf ein anderes Verfahren zur Bestimmung der Position ausgewichen wird.

Dies lässt sich gut am Beispiel der Figuren 2 und 3 veranschaulichen: In Fig. 2 liegt keine Delokalisierungssituation vor, weil sowohl die parallelen Wände W1, W2 als auch die dazu orthogonale Wand W3 sich im Erfassungsbereich B des Abstandssensors 8 bzw. der Navigationseinrichtung 4 befinden. Somit ist die Position des Reinigungsgeräts 1 gut bzw. eindeutig bestimmbar. In Fig. 3 hingegen befindet sich das Reinigungsgerät 1 in einem Korridor K und es liegt eine Delokalisierungssituation vor, da sich die parallel zu den Wänden W1, W2 keine Objekte im Erfassungsbereich B befinden und die Position sich in einer Richtung parallel zu den Wänden W1, W2 nicht bestimmen lässt. Wenn sich das Reinigungsgerät 1 von der in Fig. 2 gezeigten Position in Fahrtrichtung R parallel zu den Wänden W1, W2 bewegt, wird der Anteil der Wand W3, der sich im Erfassungsbereich B befindet, immer kleiner, bis die Wand W3 sich schließlich vollständig außerhalb des Erfassungsbereichs B befindet und die in Fig. 3 dargestellte Situation vorliegt. In den Messdaten D würde sich das Wegbewegen von der Wand W3 in einer immer kürzer werdenden Linie niederschlagen, die orthogonal zu Linien verläuft, die zu den Wänden W1 und W2 korrespondieren. Die zu der Wand W1 oder W2 korrespondierende Linie stellt eine Hauptlinie H in den Messdaten D dar und die zur Wand W3 korrespondierende Linie stellt eine sich orthogonal zur Hauptlinie H erstreckende Struktur S dar. Wenn der Grenzwert für die Ausdehnung L der Strukturen S in den Messdaten D nun ausreichend groß gewählt wird, wird mit dem Erkennungsverfahren bereits das Vorliegen einer Delokalisierungssituation erkannt, wenn sich noch ein Anteil der Wand W3 im Erfassungsbereich B befindet und somit die Position noch bestimmbar ist. Eine Delokalisierungssituation wird so schon erkannt, bevor sich das Reinigungsgerät 1 in einem Korridor K befindet.

Vorzugsweise wechselt das Reinigungsgerät 1, insbesondere von dem im normalen Betrieb verwendeten Verfahrens zur Bestimmung der Position bzw. der Partikelfilter-Lokalisierung, automatisch zu einem anderen Verfahren zur Bestimmung der Position, wenn mit dem Erkennungsverfahren eine Delokalisierungssituation erkannt wird. Insbesondere kann ein Wechsel zu einem Odometrie-Verfahren und/oder zu einer Koppelnavigation, erfolgen. Bei dem Odometrie-Verfahren bzw. der Koppelnavigation wird die Position vorzugsweise mittels des zuvor erläuterten Inertialsensors 10 und/oder Odometriesensors des Reinigungsgeräts 1 bestimmt, optional unter zusätzlicher Berücksichtigung der Messdaten D des Abstandssensors 8, 9.

Wenn mit dem Erkennungsverfahren keine Delokalisierungssituation mehr erkannt wird, wechselt das Reinigungsgerät 1 vorzugsweise automatisch wieder zu dem vor der erkannten Delokalisierungssituation verwendeten Verfahren zur Bestimmung der Position, insbesondere zu der Partikelfilter-Lokalisierung.

Einzelne Aspekte, Merkmale und Verfahrensschritte der vorliegenden Erfindung können unabhängig voneinander, aber auch in beliebiger Kombination oder Reihenfolge realisiert werden.

### Bezugszeichenliste:

- 1: Reinigungsgerät
- 2: Gehäuse
- 3: Räder
- 4: Navigationseinrichtung
- 5: Datenverarbeitungseinrichtung
- 6: Steuereinrichtung
- 7: Ansaugöffnung
- 8: Abstandssensor
- 9: weiterer Abstandssensor
- 10: Inertialsensor

- A: Abschnitt
- B: Erfassungsbereich
- D: Messdaten
- H: Hauptlinie
- L: Ausdehnung
- K: Korridor
- R: Fahrtrichtung
- S: Struktur
- S1-S3: Struktur
- V: Vertikalachse
- W1-W3: Wand

## Patentansprüche

1. Verfahren zum Betreiben eines selbstfahrenden Reinigungsgeräts (1),
wobei das Reinigungsgerät (1) autonom in einer Umgebung navigiert und seine Position in der Umgebung mittels einer Navigationseinrichtung (4) bestimmt,
wobei Messdaten (D) der Navigationseinrichtung (4) als Messpunkte in einem Koordinatensystem vorliegen, wobei die Messpunkte jeweils durch zwei Koordinaten definiert sind,
wobei das Reinigungsgerät (1) ein Erkennungsverfahren zum Erkennen einer Delokalisierungssituation durchführt,
wobei eine Delokalisierungssituation eine Situation ist, in der ein Verlust einer Bestimmbarkeit der Position entlang zumindest einer Achse droht oder erfolgt ist und/oder in der sich das Reinigungsgerät (1) in einem Korridor (K) befindet oder in einen Korridor (K) zu gelangen droht,
**dadurch gekennzeichnet,**
**dass** bei dem Erkennungsverfahren eine gerade Hauptlinie (H) in den Messdaten (D) identifiziert wird und analysiert wird, ob die Messdaten (D) eine sich quer zu der Hauptlinie (H) erstreckende Struktur (S) enthalten, wobei eine Ausdehnung (L) von Strukturen (S) in den Messdaten (D) orthogonal zu der Hauptlinie (H) bestimmt und mit einem insbesondere vordefinierten Grenzwert verglichen wird, und dass es als Delokalisierungssituation gewertet wird, wenn die Messdaten keine Struktur (S) enthalten, deren Ausdehnung (L) größer als der Grenzwert ist.

2. Verfahren nach Anspruch 1, **dadurch gekennzeichnet, dass** eine Lage der Hauptlinie (H) relativ zu dem Koordinatensystem, insbesondere ein Winkel und/oder eine Steigung der Hauptlinie (H), bestimmt wird.

3. Verfahren nach einem der voranstehenden Ansprüche, **dadurch gekennzeichnet, dass** eine Koordinatentransformation, insbesondere Drehung, der Messdaten (D) durchgeführt wird, insbesondere sodass die Hauptlinie (H) nach der Koordinatentransformation parallel zu einer Achse des Koordinatensystems ist.

4. Verfahren nach einem der voranstehenden Ansprüche, **dadurch gekennzeichnet, dass**, insbesondere nach einer Koordinatentransformation bzw. Drehung, eine Projektion der Messdaten (D) auf eine Achse orthogonal zu der Hauptlinie (H) bestimmt wird.

5. Verfahren nach einem der voranstehenden Ansprüche, **dadurch gekennzeichnet, dass** das Koordinatensystem oder eine Achse des Koordinatensystems orthogonal zu der Hauptlinie (H) in vorzugsweise gleich große Abschnitte (A) unterteilt wird, wobei ein Abschnitt (A) als besetzt markiert wird, wenn sich mindestens ein Messpunkt bzw. dessen Projektion innerhalb des Abschnitts (A) befindet und/oder wobei ein Abschnitt (A) als unbesetzt markiert wird, wenn sich innerhalb des Abschnitts (A) kein Messpunkt bzw. keine Projektion eines Messpunkts befindet.

6. Verfahren nach Anspruch 5, **dadurch gekennzeichnet, dass** jeweils die Anzahl von benachbarten als besetzt markierten Abschnitten (A) bestimmt, insbesondere gezählt, wird.

7. Verfahren nach Anspruch 5 oder 6, **dadurch gekennzeichnet, dass** ein Abschnitt (A) nicht als besetzt markiert wird und/oder bei der Bestimmung der Anzahl von benachbarten als besetzt markierten Abschnitten (A) nicht als besetzt markierter Abschnitt (A) behandelt wird, wenn die Anzahl von Messpunkten in dem Abschnitt (A) kleiner oder gleich einem vordefinierten Minimum ist und sich in einem benachbarten Abschnitt (A) oder den beiden benachbarten Abschnitten (A) kein Messpunkt befindet.

8. Verfahren nach einem der Ansprüche 5 bis 7, **dadurch gekennzeichnet, dass** Messpunkte, die in demselben Abschnitt (A) und/oder in benachbarten Abschnitten (A) liegen, zusammen eine Struktur (S) bilden und/oder dass eine Anzahl von benachbarten als besetzt markierten Abschnitten (A) eine Ausdehnung (L) einer Struktur (S) orthogonal zu der Hauptlinie (H) repräsentiert und/oder dass der Grenzwert durch eine maximale Anzahl von benachbarten als besetzt markierten Abschnitten (A) gebildet ist.

9. Verfahren nach einem der voranstehenden Ansprüche, **dadurch gekennzeichnet, dass** die Hauptlinie (H) mit einem Linienerkennungsalgorithmus identifiziert wird, insbesondere mit einer Hough-Transformation oder einem RANSAC-Algorithmus.

10. Verfahren nach einem der voranstehenden Ansprüche, **dadurch gekennzeichnet, dass** der Grenzwert so festgelegt ist, dass es als Delokalisierungssituation gewertet wird, wenn die Position mittels der Navigationseinrichtung (4) zwar noch bestimmbar ist, aber ein Verlust der Bestimmbarkeit der Position mittels der Navigationseinrichtung (4) droht.

11. Verfahren nach einem der voranstehenden Ansprüche, **dadurch gekennzeichnet, dass** die Navigationseinrichtung (4) einen Abstandssensor (8), insbesondere Laserabstandssensor, besonders bevorzugt Lidar-Sensor, aufweist oder daraus besteht.

12. Verfahren nach einem der voranstehenden Ansprüche, **dadurch gekennzeichnet, dass** zur Bestimmung der Position des Reinigungsgeräts (1) eine Partikelfilter-Lokalisierung verwendet wird.

13. Verfahren nach einem der voranstehenden Ansprüche, **dadurch gekennzeichnet, dass** das Reinigungsgerät (1) automatisch zu einem anderen Verfahren zur Bestimmung der Position, insbesondere zu einem Odometrie-Verfahren und/oder zu einer Koppelnavigation, wechselt, wenn mit dem Erkennungsverfahren eine Delokalisierungssituation erkannt wird.

14. Verfahren nach Anspruch 13, **dadurch gekennzeichnet, dass** das Reinigungsgerät (1) automatisch zum vor der erkannten Delokalisierungssituation verwendeten Verfahren zur Bestimmung der Position, insbesondere zu einer Partikelfilter-Lokalisierung, wechselt, wenn mit dem Erkennungsverfahren keine Delokalisierungssituation mehr erkannt wird.

15. Selbstfahrendes Reinigungsgerät (1), wobei das Reinigungsgerät (1) eine Navigationseinrichtung (4), eine Datenverarbeitungseinrichtung (5) und eine Steuereinrichtung (6) aufweist, um autonom in einer Umgebung zu navigieren,
**dadurch gekennzeichnet,**
**dass** das Reinigungsgerät (1) zur Durchführung des Verfahrens nach einem der voranstehenden Ansprüche ausgebildet ist.
